# EUROPÄISCHE PATENTSCHRIFT

(11) **EP 2 004 380 B1**
(45) Veröffentlichungstag und Bekanntmachung des Hinweises auf die Patenterteilung: **29.06.2011**
(21) Anmeldenummer: 07727735.8
(22) Anmeldetag: 03.04.2007
(51) Int. Cl.: B29C 45/16

(54) **VERFAHREN UND VORRICHTUNG ZUR HERSTELLUNG VON MEHRKOMPONENTIGEN KUNSTSTOFF-FORMTEILEN**
METHOD AND DEVICE FOR PRODUCING MULTICOMPONENT PLASTIC MOULDINGS
PROCEDE ET DISPOSITIF DE FABRICATION DE PIECES MOULEES EN MATIERE SYNTHETIQUE A PLUSIEURS COMPOSANTS

(30) Priorität: 06.04.2006 DE 102006016200
(43) Veröffentlichungstag der Anmeldung: 24.12.2008
(73) Patentinhaber: KraussMaffei Technologies GmbH, 80997 München (DE)
(72) Erfinder: JUNG, Ludwig, 82291 Mammendorf (DE); GRUBER, Marco, 81247 München (DE); REITBERGER, Andreas, 94469 Deggendorf (DE)
(74) Vertreter: Wilhelm, Ludwig
(86) Internationale Anmeldenummer: PCT/EP2007/053264
(87) Internationale Veröffentlichungsnummer: WO 2007/113305

(56) Entgegenhaltungen:
- EP-A1- 1 306 185
- DE-A1- 3 338 685
- DE-A1- 10 208 599
- DE-U1- 20 017 737
- JP-A- 62 121 024
- US-A- 5 773 049
- US-A1- 2004 094 866

## Beschreibung

Die Erfindung betrifft ein Verfahren und eine Vorrichtung zur Herstellung von mehrkomponentigen Kunststoff-Formteilen gemäß den Oberbegriffen der Ansprüche 1, 8 und 11

Typischerweise wird bei der Herstellung von mehrkomponentigen Kunststoff-Formteilen in einer ersten Kavität in einem ersten Takt ein Vorspritzling aus einer ersten Komponente hergestellt und anschließend in einer zweiten Kavität die zweite Komponente an diesen Vorspritzling angespritzt. Die einzelnen Komponenten können aus unterschiedlichen thermoplastischen Kunststoffen bestehen und gegebenenfalls auch unterschiedliche Farben aufweisen. Ebenso können bestimmte Komponenten mit Füllstoffen versehen sein. Anstelle von thermoplastischen Komponenten können auch PUR-Komponenten vorgesehen werden, wobei auch die Herstellung von mehrkomponentigen Kunststoff-Formteilen aus einer thermoplastischen Komponente und einer PUR-Komponente bekannt ist.

Aus der DE 196 50 854 ist ein Verfahren und eine Vorrichtung zum Herstellen von mehrkomponentigen Kunststoff-Formteilen mittels Drehtellertechnik bekannt, wobei ein Kunststoff-Spritzgußteil mit mindestens einer Schicht aus einem 2-Komponenten-Duroplast , vorzugsweise einem polyurethan, beschichtet wird und die beiden Komponenten nacheinander zyklussynchron im selben Werkzeug gespritzt werden. Hierzu wird eine Grundplatte verwendet, die zwei gleiche, nebeneinander angeordnete Formhälften trägt, und die drehbar um eine horizontale Maschinenlängsachse gelagert ist. Den Formhälften gegenüber sind Matrizen von einer Spritzgießmaschine und einer RIM-Vorrichtung angebracht. Nach dem Einspritzen von Thermoplast mit einer Spritzgießmaschine wird die Grundplatte um 180° um die horizontale Maschinenlängsachse gedreht und im folgenden Takt einerseits ein neues Thermoplastteil gespritzt und andererseits das Thermoplastteil aus dem ersten Takt mit dem 2-Komponenten-Duroplast beschichtet.

In dem Artikel "Hochwertige Premiumoberflächen aus Spritzgieß- und Reaktionstechnik" in der Zeitschrift "Kunststoffe", Ausgabe 10/2004, Seiten 180-182, wird ein weiteres Verfahren beschrieben, wie mehrkomponentige Kunststoff-Formteile aus einer ersten thermoplastischen Komponente und einer zweiten PUR-Komponente herstellt werden können. Auf der feststehenden Seite einer Schließeinheit einer an sich bekannten Spritzgießmaschine befindet sich die Station für das Einspritzen des thermoplastischen Kunststoffes und auf der beweglichen Seite ist an der dortigen Werkzeughälfte der Mischkopf einer RIM-Vorrichtung (RIM: Reaction Injection Molding) für die PUR-Komponente angedockt. RIM-Vorrichtungen sind für sich genommen bekannt und umfassen im wesentlichen Förder- und Dosiereinrichtungen für die einzelnen zu verarbeitenden Chemikalien, wie Polyol, Polyisocyanat und mögliche Zusatzstoffe (Farbmittel, Schäummittel,...). An der feststehenden Seite der Schließeinheit ist ein Schiebetisch für die feststehende Formhälfte vorgesehen, um diese von der Position "Spritzgießen" in die Position "PUR-gießen" zu verfahren und umgekehrt. In der Werkzeugposition "Spritzgießen" wird ein Träger zum Beispiel aus einem Polyamid-Kunststoff vorgespritzt. Am Ende der Kühlzeit öffnet sich das Werkzeug und der Schiebetisch fährt in die Position "PUR gießen". Nach dem Schließen des Werkzeugs wird die PUR-Gießhaut über den mit einer RIM-Misch- und Dosiereinheit verbundenen Mischkopf in die formvergrößerte Kavität eingespritzt.

Weiterhin ist es aus dem Stand der Technik bekannt, mehrkomponentige Kunststoff-Formteile mittels einer sogenannten Wendeplattentechnik herzustellen (Johannaber/Michaeli, Handbuch Spritzgießen, 2001, ISBN 3-446-15632-1, Bild 6.80 auf Seite 508). Hierbei wird zwischen zwei äußeren Formaufspannplatten ein mittleres Formträgerelement, häufig Wendeplatte genannt, drehbar angeordnet. Nachdem in der ersten Trennebene der Vorspritzling hergestellt worden ist, wird dieser mit dem mittleren Formträgerelement in die zweite Trennebene transportiert, wo die zweite Komponente angespritzt wird.

Aus der WO 03/013824 ist es bekannt, mittels der Wendeplattentechnik mehrkomponentige Kunststoff-Formteile aus einem thermoplastischen Träger und einer PUR-Gießhaut herzustellen. Auf einem Maschinenrahmen sind zwei äußere Formaufspannplatten verschieblich abgestützt. Zwischen diesen ist ein Tragrahmen auf dem Maschinenbett befestigt, in dem ein mittleres Formträgerelement um eine senkrecht stehende Drehachse drehbar gelagert ist. Das Formträgerelement kann plattenförmig sein und zwei Formhälften aufnehmen; es kann aber auch als Würfel zur Aufnahme von vier Formhälften ausgebildet sein. Die Formaufspannplatten können mittels geeigneter Antriebs- und Verriegelungsmittel auf das mittlere Formträgerelement zu und von diesem wegbewegt sowie mit diesem verriegelt werden. Für die Herstellung eines mehrkomponentigen Kunststoff-Formteils aus einem thermoplastischen Grundbauteil und einer PUR-Gießhaut kann die eine der äußeren Formaufspannplatte mit einem Einspritzaggregat für das thermoplastische Grundbauteil und die andere der äußeren Formaufspannplatten mit einer RIM-Vorrichtung gekoppelt werden. Seitlich der Schließeinheit können Handlingsroboter vorgesehen werden, beispielsweise ein Bearbeitungsroboter einerseits und ein Entnahmeroboter andererseits. Mit dem Bearbeitungsroboter kann beispielsweise eine Oberflächenbehandlung des Grundbauteils erfolgen. In einem ersten Takt wird auf der Seite der Einspritzeinheit zunächst das Grundbauteil aus dem thermoplastischen Kunststoff gespritzt. Nach der erforderlichen Abkühlzeit wird die Schließeinheit geöffnet und es erfolgt eine Oberflächenbehandlung des gerade gespritzten Grundbauteils. Das Formträgerelement wird um 180° gedreht und die Formhälften werden wieder verschlossen. Im nachfolgenden Takt wird einerseits auf der Seite des Einspritzaggregats ein neues thermoplastisches Grundbauteil gespritzt, während auf der gegenüberliegenden Seite über einen Mischkopf das PUR-Reaktionsgemisch in die Form eingespritzt und eine PUR-Haut auf der Oberfläche des Grundbauteils gebildet wird.

In allen oben beschriebenen Fällen wird in der einen Trennebene stets ein Vorspritzling hergestellt und in der anderen Trennebene wird stets die zweite Komponente an diesen Vorspritzling angespritzt, wobei zeitgleich in der ersten Trennebene ein neuer Vorspritzling erzeugt wird.

Aus der DE3338685A1 ist ein Etagenwerkzeug zum gleichzeitigen Vor- und Fertigspritzen von Kunststoffteilen in den beiden Trennebenen des Etagenwerkzeugs bekannt, wobei zwischen zwei äußeren Formträgern ein mittlerer Formträger vorgesehen ist, der orthogonal zur Maschinenlängsachse verschoben werden kann und der zu beiden Seiten Formnester aufweist, die mit Formnestern auf den äußeren Formträgern zusammenwirken können. Auf dem mittleren Formträger sind auf den beiden den äußeren Formträgern zugewandten Seiten jeweils zwei Gruppen von Formnestern vorgesehen, nämlich eine Gruppe von Formnestern für einen Vorspritzling und eine Gruppe von Formnestern für einen Fertigspritzling. Durch einen Verschiebungsschritt des mittleren Formträgers können diese Formnester abwechselnd mit den Formnestern auf den äußeren Formträgern zusammengefahren werden, um somit in den beiden Trennebenen jeweils unterschiedliche Kavitäten für die Vorspritzlinge und die Fertigspritzlinge zu bilden. Im geschlossenen Zustand des Etagenwerkzeugs sind alle Werkzeugteile zugefahren und bilden geschlossene Kavitäten, wobei zwei Gruppen von Kavitäten gebildet werden, so dass simultan zum Fertigspritzen neue Vorspritzlinge hergestellt können.

Aus der nächstkommenden DE20017737U ist ein weiteres Etagenwerkzeug zum Spritzgießen von Kunststoffen bekannt, mit dem Kunststoffteile mit mehreren Komponenten hergestellt werden können. Die äußeren Werkzeugteile des Etagenwerkzeugs sind als Wendewerkzeuge ausgebildet und bestehen aus einem Basisteil sowie aus einem Drehteil, das um die Maschinenlängsachse gedreht werden kann. Durch Drehen der äußeren Drehteile können in den beiden Trennebenen nacheinander verschiedene Kavitäten gebildet werden. An die in ersten Kavitäten gebildeten Vorspritzlinge werden in den nachfolgenden Takten weitere Komponenten angespritzt. Im geschlossenen Zustand des Etagenwerkzeugs sind alle Werkzeugteile zugefahren und bilden geschlossene Kavitäten.

Ausgehend hiervon liegt der Erfindung die Aufgabe zugrunde, eine alternative Anordnung der Formhälften vorzuschlagen.

Die Lösung dieser Aufgabe erfolgt durch ein Verfahren mit den Merkmalen von Anspruch 1 sowie mit Vorrichtungen mit den Merkmalen der nebengeordneten Ansprüche 8 und 11. Vorteilhafte Weiterentwicklungen und Ausgestaltungen der Erfindung finden sich in den Unteransprüchen.

Dadurch, dass in den beiden Trennebenen mehrere Herstellungsschritte nacheinander ablaufen, erhöht sich zwar die Zykluszeit insgesamt, jedoch werden pro Zyklus zwei Kunststoff-Formteile hergestellt, so dass die Zykluszeit pro Formteil geringer ist als bei der Herstellung der gleichen Kunststoff-Formteile mit einer Wendeplattentechnik gemäß dem oben genannten Stand der Technik. Je nach Anwendungsfall können beispielsweise im ersten Takt thermoplastische Vorspritzlinge hergestellt und im zweiten Takt mit einer PUR-Komponente überflutet werden. Es kann aber auch eine zweite thermoplastische Komponente an den Vorspritzling angespritzt werden. Gegebenenfalls kann auch der Vorspritzling aus einem ersten PUR-Gemisch hergestellt und nachfolgend mit einem zweiten PUR-Gemisch überflutet werden. In weiteren Takten können weitere unterschiedliche Kavitäten gebildet und weitere Komponenten hinzugefügt werden. Es können weitere thermoplastische Komponenten angespritzt werden und/oder es können weitere PUR-Gemische zum Überfluten vorgesehen werden.

Während der Herstellung der Vorspritzlinge und/oder während des Überflutens bzw. Anspritzens der Vorspritzlinge können an den freien Formhälften des mittleren Formträgerelements Vorbehandlungen unterschiedlichster Art vorgenommen werden.

Bei der Verarbeitung von PUR-Gemischen ist häufig mit sogenannten Trennmitteln zu arbeiten, um ein Anhaften der PUR-Komponente in der Formhälfte zu vermeiden. Im vorliegenden Fall kann ein Trennmittel in der oder in den freien PUR-Formhälften einbracht werden, beispielsweise mit einem Sprühvorgang. Weiterhin kann das Trennmittel in ausreichender Zeit ablüften ohne eine Zykluszeitverlängerung zu verursachen. Auch kann das eingebrachte Trennmittel gezielt abgelüftet werden, z.B. durch Abblasen der PUR-Formhälfte mit Luft. Denkbar ist auch eine Reinigung der freien Formhälften von PUR-Resten. Dies kann z.B. mit rotierenden Bürsten, mit einem Plasma-Prozeß etc. durchgeführt werden.

Weiterhin ist es möglich, die PUR-Formhälften vor dem PUR-Eintrag mit einer Farbe zu lackieren. Diese Farbe verbindet sich mit dem später eingebrachten PUR-Material und auf diese Art und Weise können lackierte Bauteile im Werkzeug hergesetellt werden (auch In Mould Coating (IMC)-Prozeß genannt). Mit dem hier vorgestellten Verfahren kann in der freien PUR-Formhälfte ein Lackeintrag für einen In Mold Coating-Prozess durchgeführt werden und zwar während im ersten Takt ein thermoplastisches Grundbauteil gespritzt wird. Im zweiten Takt wird dann PUR-Material zwischen dem Grundbauteil und der lackierten PUR-Formhälfte geflutet. Auf diese Weise kann ein zusätzliches Oberflächenfinish (Lackierung) zyklussynchron in einem 2-Komponentenprozeß hergestellt werden.

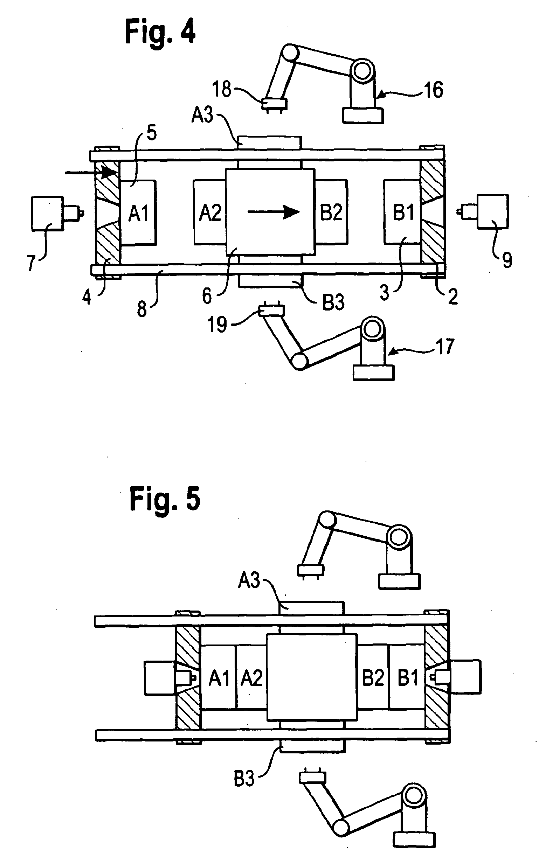

Eine Absaugvorrichtung kann ausserhalb der Werkzeugschließeinheit über dem seitlichen Bereich der Formhälften A3 und B3 in Fig. 4 platziert werden. Damit kann sichergestellt werden, dass die Trennmitteldämpfe und gegebenenfalls die Lackierdämpfe bei Verwendung der A3- und B3-Formhälften als PUR-Formhälften gemäß der geltenden Arbeitsschutzrichtlinien abgesaugt werden.

Desweiteren können in die freien Formhälften Einlegeteile und/oder Dekormaterialien wie Stoffe, Folien oder dergleichen eingebracht und für die nachfolgenden Prozesse fixiert werden. Zwischen dem Einlegeteil (z.B. einer Folie) und dem Kunststoffträger kann dann eine PUR-Schicht eingebracht werden. Vorteil ist hierbei, daß das PUR-Material nur einen geringen Werkzeuginnendruck aufbaut und damit das Einlegeteil nicht beschädigt. Gerade bei empfindlichen Dekoren und lackierten Folien hat dieses Verfahren große Vorteile. Weiterhin erspart man sich durch das Einlegeteil die Trennmitteleinbringung für die PUR-Formhälfte. Die Einlegeteile können aber auch nur partiell auf der Oberfläche der PUR-Formhälfte positioniert werden. Damit wird es möglich eine Oberfläche bestehend aus dem Einlegematerial und dem eingebrachten PUR-Material herzustellen.

Von Vorteil ist die Erfindung auch bei der Herstellung eines Paares von Kunststoff-Formteilen, bestehend aus einem Rechtsteil und einem Linksteil. Je Zyklus kann nämlich ein solches Paar hergestellt werden, wenn in der einen Trennebene das Rechtsteil und in der anderen Trennebene das Linksteil hergestellt wird. Dies kann zeitgleich und in demselben Zyklus erfolgen.

Es können auch in der einen Trennebene ein Hauptbauteil und in der anderen Trennebene mehrere Zubehörbauteile hergestellt werden, wenn die Formhälften der einen Trennebene für die Herstellung eines Hauptbauteils und die Formhälften der anderen Trennebene für die Herstellung von ein oder mehreren Zubehörteilen ausgebildet sind.

Eine geeignete Vorrichtung weist zwei äußere Formhälftenträger mit äußeren Formhälften und ein mittleres Formträgerelement mit mittleren Formhälften auf. Ferner sind an sich bekannte Mittel zum Zufahren und Zuhalten von jeweils vier Formhälften vorgesehen, wobei zwei Trennebenen gebildet werden. Dabei sind die Formhälften derart einander zugeordnet, dass zeitgleich in beiden Trennebenen von Takt zu Takt nacheinander unterschiedliche Kavitäten gebildet werden können. In der einen Trennebene werden die A-Formhälften (A1, A2, A3,...) und in der anderen Trennebene die B-Formhälften (B1, B2, B3,...) zusammengebracht, wobei die A1-Formhälfte von Takt zu Takt mit den weiteren A-Formhälften und die B1-Formhälfte von Takt zu Takt mit den weiteren B-Formhälften zusammengebracht werden. Auf diese weise können von Takt zu Takt in den beiden Trennebenen nacheinander unterschiedliche Kavitäten gebildet werden. In der einen Trennebene die Kavitäten A1+A2, A1+A3, A1,+A4,...und in der anderen Trennebene die Kavitäten B1+B2, B1+B3, B1+B4,... Die A- und die B-Formhälften können zur Herstellung gleicher oder unterschiedlicher Formteile ausgebildet sein. Im zuletzt genannten Fall kann es sich beispielsweise um ein Rechtsteil und um ein Linksteil eines Paares von Formteilen handeln, wie beispielsweise um Teile einer Türinnenverkleidung bei einem Fahrzeug. Ferner sind Spritzeinheiten und/oder PUR-Anlagen vorgesehen, die an die Formträgerelemente und/oder an die Formhälften angedockt sind oder angedockt werden können.

In einer Ausführungsform weist das mittlere Formträgerelement mindestens zwei voneinander verschiedene A-Formhäflten (A2, A3,...) und mindestens zwei voneinander verschiedene B-Formhälften (B2, B3,...) auf. Die äußeren Formhälften A1 und B1 sind auf den äußeren Formhälftenträgern befestigt, die beispielsweise als klassische Formaufspannplatten ausgeführt sein können. In den beiden Trennebenen können von Takt zu Takt nacheinander verschiedene Kavitäten gebildet werden: A1+A2, A1+A3,...in der einen Trennebene und B1+B2, B1+B3,....in der anderen Trennebene. Die Formhälften A1 und B1 sind so ausgebildet, dass die Vorspritzlinge in ihnen gehalten werden. Das mittlere Formträgerelement kann drehbar sein. Insbesondere kann es sich um ein würfel- oder prismenförmiges Formträgerelement handeln, das um eine vertikale oder eine horizontale Achse drehbar ist, so dass in den beiden Trennebenen von Takt zu Takt die unterschiedlichen Kavitäten gebildet werden können.

In einer weiteren Ausführungsform ist das mittlere Formträgerelement plattenförmig oder dergleichen ausgebildet und weist zwei parallele Formaufspannflächen auf, wobei die der ersten A-Formhälfte (A1) zugeordneten weiteren A-Formhälften (A2, A3,...) auf der einen Formaufspannfläche und die der ersten B-Formhälfte (B1) zugeordneten weiteren B-Formhälften (B2, B3,...) auf der anderen Formaufspannfläche angeordnet sind. Das mittlere Formträgerelement ist von Takt zu Takt senkrecht zur Maschinenlängsachse verschiebbar, so dass in den beiden Trennebenen von Takt zu Takt unterschiedliche Kavitäten gebildet werden können.

In einer weiteren Ausführungsform sind die Funktionen von mittleren Formhälftenträger und äußerem Formhälftenträger vertauscht. Die erste A-Formhälfte A1 und die erste B-Formhälfte B1 sind auf dem mittleren Formhälftenträger angeordnet, wohingegen die weiteren A-Formhälften (A2, A3,...) auf dem einen äußeren Formträgerelement und die weiteren B-Formhälften (B2, B3,...) auf dem anderen äußeren Formträgerelement angeordnet sind. Die beiden äußeren Formträgerelement können von Takt zu Takt linear verschoben und/oder um eine horizontale Achse gedreht werden, so dass in den beiden Trennebenen von Takt zu Takt unterschiedliche Kavitäten gebildet werden können. Beispielsweise können Schiebetische und/oder Drehtische als Formhälftenträger vorgesehen werden, die ihrerseits auf äußeren Formaufspannplatten befestigt sind.

Eine geeignete Vorrichtung weist auf einem Maschinenbett eine feststehende und eine bewegliche Formaufspannplatte auf (äußere Formaufspannplatten), zwischen denen das mittlere Formträgerelement auf einem Schiebetisch in Maschinenlängsrichtung verfahrbar und um eine vertikale Achse drehbar ist. Das mittlere Formträgerelement ist würfelförmig ausgebildet und trägt vier Formhälften (A2, A3, B2, B3), von denen jeweils zwei benachbart liegende Formhälften (A2, A3 bzw. B2, B3) einer äußeren Formaufspannplatte als Formhälftenträger zugeordnet sind und mit der dort angebrachten äußeren Formhälfte Kavitäten unterschiedlicher Größe bilden können. Die äußeren Formhälften sind so gestaltet, dass der Vorspritzling in diesen sitzen bleibt.

Bei einer weiteren geeigneten Vorrichtung sind auf einem Maschinenbett zwei bewegliche äußere Formaufspannplatten als Formhälftenträger vorgesehen, zwischen denen das mittlere Formträgerelement ortsfest mit dem Maschinenbett verbunden und um eine vertikale Achse drehbar ist. Eine solche Vorrichtung ist beipielsweise in der WO 03/013824 A1 beschrieben. Das mittlere Formträgerelement ist würfelförmig ausgebildet und trägt vier Formhälften (A2, A3, B2, B3), von denen jeweils zwei benachbart liegende Formhälften (A2, A3 bzw. B2, B3) einer äußeren Formaufspannplatte zugeordnet sind.

Das mittlere Formträgerelement kann auch prismenförmig mit mehr als vier Formaufspannflächen ausgebildet sein; beispielsweise kann es sich um einen sechs- oder achteckigen Formhälftenträger mit sechs oder acht Formaufspannflächen handeln.

An den äußeren Formaufspannplatten bzw. den äußeren Formhälften sind je nach Anwendungsfall geeignete Kombinationen von Spritzeinheiten und PUR-Mischköpfen vorgesehen.

Bei der Herstellung von mehrkomponentigen Kunststoff-Formteilen aus einem thermoplastischen Grundbauteil, das mit einer PUR-Komponente überflutet werden soll, können an den äußeren Formaufspannplatten an sich bekannte Spritzeinheiten vorgesehen und an die äußeren Formhälften angedockt sein, während die Mischköpfe zum Überfluten mit einem PUR-Gemisch von der Seite an die äußeren Formhälften angedockt sein können, beispielsweise in L-Stellung zur jeweiligen Spritzeinheit oder in vertikaler Stellung. Die Mischköpfe können fest an den Formhälften montiert sein oder mittels geeigneter Roboter an die Formhälften angedockt werden, beispielsweise auch nur für die Zeit des Überflutens des Vorspritzlings mit dem PUR-Gemisch. Mehrere PUR-Mischköpfe können von einer einzigen PUR-Dosieranlage mit dem PUR-Gemisch versorgt werden; ebenso kann jeder Mischkopf aber auch über seine eigene PUR-Dosieranlage verfügen.

Bei der Herstellung von mehrkomponentigen Kunststoff-Formteilen aus mehreren thermoplastischen Komponenten können zusätzlich zu den Spritzeinheiten an den äußeren Formaufspannplatten weitere Spritzeinheiten in L-Stellung, Huckepack oder in vertikaler Stellung vorgesehen werden.

Über dem Bereich der freien Formhälften des mittleren Formhälftenträgers und/oder der äußeren Formhälftenträger kann eine Absaugvorrichtung vorgesehen sein.

Falls die Vorbehandlung der freien Formhälften durch eine oder mehrere Bedienpersonen erfolgt, kann eine Sicherheitsvorrichtung vorgesehen sein und Bewegungen von Maschinenteilen, insbesondere des mittleren Formträgerelements oder beweglicher äußerer Formaufspannplatten, erfolgen erst, wenn die Sicherheitsvorrichtung von einer Bedienperson betätigt worden ist. Es kann auch ein Sicherheitsfeld definiert werden, das mittels Lichtschranken überwacht wird, und die Bewegungen der Maschinenteile erfolgen erst, wenn die Bedienpersonen das Sicherheitsfeld verlassen haben und die Sicherheitsvorrichtung betätigt worden ist. Nachfolgend soll die Erfindung anhand von Ausführungsbeispielen und unter Bezugnahme auf die Figuren näher erläutert werden.

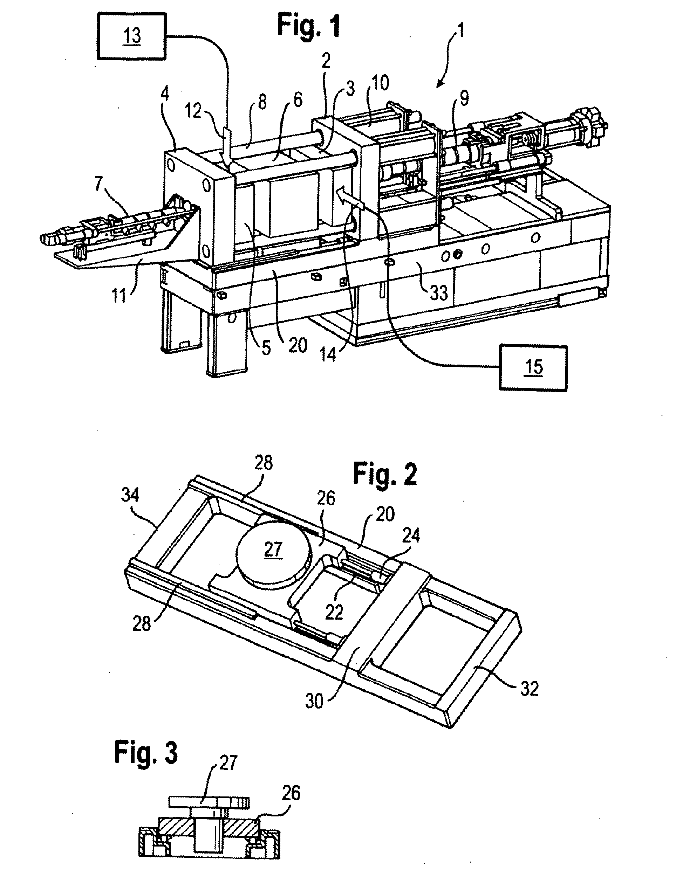

Figur 1 zeigt eine Spritzgießmaschine 1 mit einem Maschinenbett 33, einer festen Formaufspannplatte 2, einer beweglichen Formaufspannplatte 4 und einem würfelförmigen Formträgerelement 6. Die Formaufspannplatten tragen Formhälften 3 und 5, die zusammen mit Formhälften des Formträgerelements 6 Kavitäten bilden. Die bewegliche Formaufspannplatte 4 wird über Holme 8, die durch die feststehende Formaufspannplatte geführt sind, auf die Formaufspannplatte 2 zu oder von ihr weg bewegt. Weiterhin dargestellt sind ein Antrieb 10 zum Bewegen der Formaufspannplatte 4 und Spritzeinheiten 7 und 9, wobei die Spritzeinheit 7 auf einem an der beweglichen Formaufspannplatte 4 befestigten Gestell 11 und die Spritzeinheit 9 auf dem Maschinenbett 35 abgestützt sind. Ein erster PUR-Mischkopf 12 ist an der beweglichen Formhälfte 5 angedockt und an eine erste PUR-Dosieranlage 13 angeschlossen. Ein zweiter PUR-Mischkopf 14 ist an der feststehenden Formhälfte 3 angedockt und an eine zweite PUR-Dosieranlage angeschlossen. Der gesamte Aufbau aus Antrieb und Formaufspannplatten ist auf einem Modulrahmen 20 gelagert, der seinerseits auf dem Maschinenbett 33 der Spritzgießmaschine befestigt ist.

Fig.2 zeigt in perspektivischer Aufsicht Einzelheiten des Modulrahmens und Fig. 3 zeigt einen Schnitt durch den Drehteller im Modulrahmen. In dem Modulrahmen 20 ist eine Grundplatte 26 in Linearführungen 22 verschieblich gelagert, wobei die Grundplatte 26 über Hydraulikzylinder 24 oder Spindeltriebe oder dergleichen in Maschinenlängsrichtung verschoben werden kann. Die Grundplatte 26 trägt einen Drehteller 27, der mittels geeigneter Lager auf der Grundplatte 26 drehbar gelagert ist. Desweiteren weist der Modulrahmen an seiner Oberseite Gleitführungen 28 für die bewegliche Formaufspannplatte 4 auf. Eine Strebe 30 dient der Aufnahme der feststehenden Formaufspannplatte 2. Streben 32 und 34 schließen den Modulrahmen nach außen ab und dienen beispielsweise der Abstützung der Platte des Antriebs. Der drehbar gelagerte Drehteller 27 kann beispielsweise über einen Zahnkranz und ein damit kämmendes Ritzel angetrieben werden, wie es aus der WO 01/10624 A1 bekannt ist.

Anhand der nachfolgenden schematischen Figuren 4 bis 10 soll der Verfahrensablauf näher beschrieben werden.

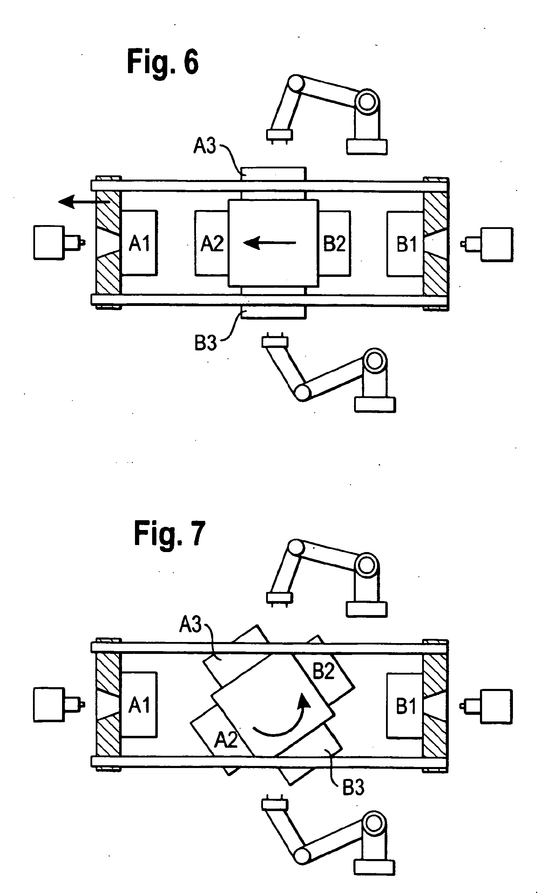

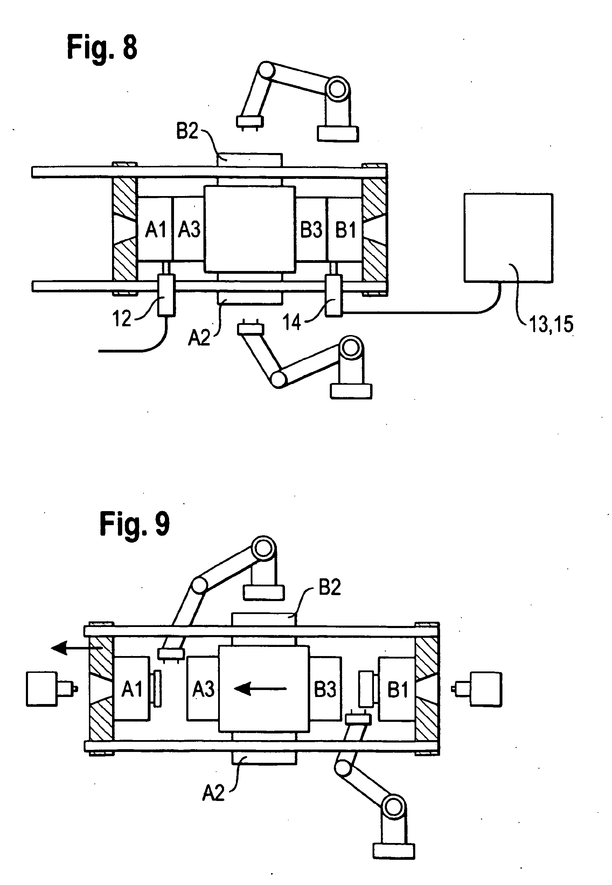

Die Figur 4 zeigt die Ausgangssituation zu Beginn eines Zyklus, bei der die Schließeinheit der Spritzgießmaschine geöffnet ist. Ausgehend hiervon wird die Schließeinheit zugefahren, wie dies mit den beiden Pfeilen angedeutet ist und nachfolgend verriegelt. Dies Situation ist in der Figur 5 dargestellt. Nunmehr bilden die Formhälften A1 und A2 in der ersten Trennebene (Trennebene A) eine erste Kavität A1+A2 für einen Vorspritzling des Bauteils A und in gleicher Weise bilden die Formhälften B1 und B2 in der zweiten Trennebene (Trennebene B) eine erste Kavität B1+B2 für einen Vorspritzling des Bauteils B. Mittels der Spritzeinheiten 7 und 9 wird eine thermoplastische Kunststoffschmelze in die so gebildeten Kavitäten eingespritzt und Vorspritzlinge für die Bauteile A und B erzeugt. Parallel dazu kann mittels der Roboter 16 und 17 und deren Greifer- und Vorbehandlungseinheiten 18 und 19 in den freien Formhälften A3 und B3 eine Vorbehandlung durchgeführt werden. Beispielsweise kann ein Trennmittel auf die Oberflächen der Formhälften A3 und B3 aufgesprüht werden. Im nächsten Schritt wird die Schließeinheit aufgefahren (Figur 6), wobei die Vorspritzlinge auf den äußeren Formhälften A1 und B1 verbleiben. Anschließend wird das mittlere Formträgerelement 6 um 90° im Uhrzeigersinn oder im Gegenuhrzeigersinn gedreht (Figur 7) und die Schließeinheit wird nachfolgend wieder zugefahren und verriegelt, so dass die Situation wie in Figur 8 eingenommen wird. Nunmehr bilden die Formhälften A3 und A1 einerseits und B3 und B1 andererseits neue Kavitäten, in denen sich die thermoplastischen Vorspritzlinge befinden. Mit den PUR-Mischköpfen 12 und 14 können nun die thermoplastischen Vorspritzlinge mit einer PUR-Gießhaut überflutet werden. Nachdem die Reaktionszeit für die PUR-Reaktion abgelaufen ist, kann die Schließeinheit aufgefahren und die fertigen Bauteile A und B aus den Formhälften A1 und B1 entnommen werden - Figur 9 - wobei in der Figur schematisch angedeutet sein soll, dass die Bauteile A und B verschieden sind. Beispielsweise kann das A-Bauteil das Linksteil und das B-Bauteil das Rechtsteil eines Paares von Kunststoff-Formteilen sein, wie beispielsweise die linke und die rechte Türinnenverkleidung bei einer Fahrzeugtür. Anschließend wird das mittlere Formträgerelement um 90° im zurück gedreht und die Schließeinheit nimmt wieder ihre Ausgangsposition ein, wie sie in Figur 4 dargestellt ist. Nunmehr kann ein neuer Zyklus beginnen.

Es müssen nicht beide Bauteile A und B parallel entnommen werden. Optional kann nur die Trennebene B geöffnet werden und die Trennebene A geschlossen gehalten werden. Dies kann erforderlich sein, wenn den beiden Trennebenen A und B die PUR-Gemische unterschiedliche Reaktionszeiten aufweisen und/oder die thermoplastischen Komponenten unterschiedliche Kühlzeiten erfordern. Auf diese Weise können die beiden Bauteile A und B auch mit dem gleichen Roboter entnommen werden, der nacheinander in die Trennebenen A und B zu den Formhälften A1 und B1 bewegt wird.

Anstelle der oben beschriebenen Vorbehandlung können an den freien Formhälften je nach Anwendungsfall auch andere Vorbehandlungen oder Prozeßschritte erfolgen. Beispielsweise können die freien Formhälften gereinigt werden. Bei der PUR-Verarbeitung ist es immer wieder notwendig die PUR-Formhälften zu reinigen, da es zu Ablagerungen auf der Werkzeugoberfläche kommen kann. Mit z.B. einem Plasma-Prozeß können Werkzeugbereiche oder Werkzeughälften zyklisch gereinigt werden. Auch ist es möglich einen Lackeintrag für einen In-Mold-Coating-Prozess in diesem Takt vorzunehmen. Desweiteren ist es möglich, Einlegeteile oder Dekormaterialien wie Stoffe oder Folien in die freien Formhälften einzulegen und dort zu fixieren. Das fertige Bauteil weist dann neben den beiden Kunststoff-Komponenten noch das Einlegeteil oder ein Dekormaterial auf.

Falls als zweite Komponente kein PUR-Gemisch, sondern eine weitere thermoplastische Komponente angespritzt werden soll, können in an sich bekannter Weise weitere Spritzeinheite in L-Stellung, Huckepack oder in vertikaler Anordnung an den beiden Formaufspannplatten vorgesehen werden.

Mit dem erfindungsgemäßen Verfahren und der erfindungsgemäßen Vorrichtung werden pro Bauteil nur drei Werkzeughälften benötigt. Demgegenüber werden beim Standard-Zwei-Komponenten-Verfahren mit der eingangs beschriebenen Wendeplattentechnik vier Werkzeughälften pro Bauteil benötigt. Legt man eine Zykluszeit von z.B. 60-70 Sekunden für ein fertiges Bauteil auf einer Drehtisch- oder Wendeplatten-Spritzgießmaschine zugrunde, so werden bei dem erfindungsgemäßen Verfahren für die Herstellung des gleichen Bauteils 90 - 100 Sekunden für einen Zyklus benötigt. In einem Zyklus werden aber zwei Bauteile A und B hergestellt, so dass sich pro Bauteil eine Zykluszeit von etwa 45 - 50 Sekunden ergibt, was einen relativ deutlichen Zykluszeitvorteil bedeutet.

Weiterhin können mit einer erfindungsgemäßen Spritzgießmaschine zwei unterschiedliche Bauteile hergestellt werden (links/rechts-Bauteile), wo sonst zwei Maschinen notwendig wären. Pro Bauteil wird nur ein Werkzeugsatz bestehend aus 3 Formhälften benötigt. Für eine Standard-Wendeplattenanwendung sind mindestens 4 Formhälften erforderlich. Die Werkzeugkosten pro Bauteil werden hierdurch deutlich minimiert.

Entnahmegeräte können auf der festen und/oder der beweglichen Formaufspannplatte montiert sein. Desweiteren ist es möglich ein einziges Entnahmegerät, z.B. einen 6-Achs-Roboter, auf dem mittleren Formträger zu montieren; auf diese Weise kann man ein Entnahmegerät für beide Trennebenen A und B verwenden.

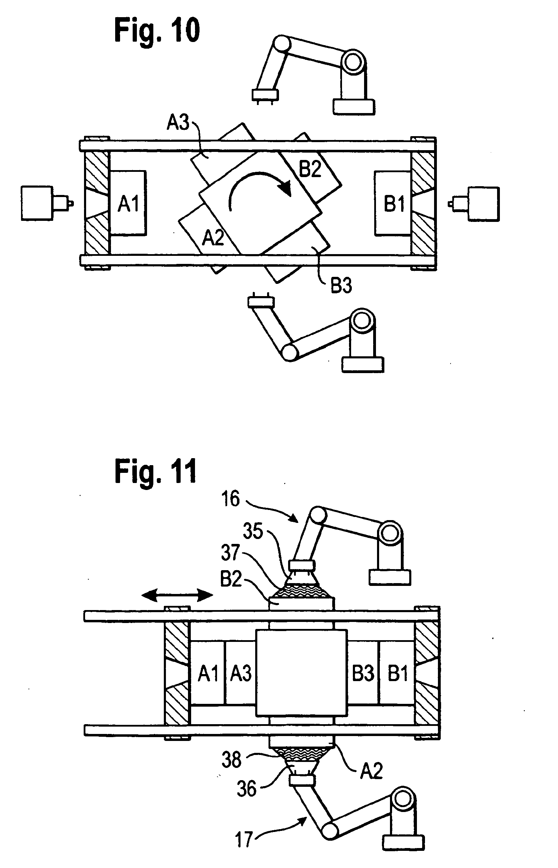

In der Figur 11 ist schematisch dargestellt, wie an den freien Formhälften A2 und B2 eine Wärmevorbehandlung vorgenommen wird. Hierzu verfügen die beiden seitlich positionierten Roboter 16 und 17 über Heizstrahler 35 und 36, mit denen Heizfelder 37 und 38 erzeugt werden können. Damit kann flächig oder partiell eine Vorbehandlung der freien Formhälften A2, A3, B2 und B3 vorgenommen werden, während parallel dazu in den jeweils geschlossenen Formhälften eine Spritzgießvorgang und/oder ein PUR-Gießvorgang abläuft. Insbesondere beim Überfluten eines thermoplastischen Vorspritzlings mit einem PUR-Gemisch ist eine flächige oder partielle Vorwärmung der PUR-Formhälften A3 und B3 vorteilhaft, weil dann die PUR-Reaktion schneller ablaufen kann und bessere PUR-Oberlächen erzielt werden können. Während der Reaktionszeit kühlt die PUR-Formhälfte wieder auf den von einem Temperiermedium eingestellten Temperaturwert ab, um die Reaktionswärme abzuführen und um zu verhindern, dass der thermoplastische Vorspritzling zu stark erwärmt wird.

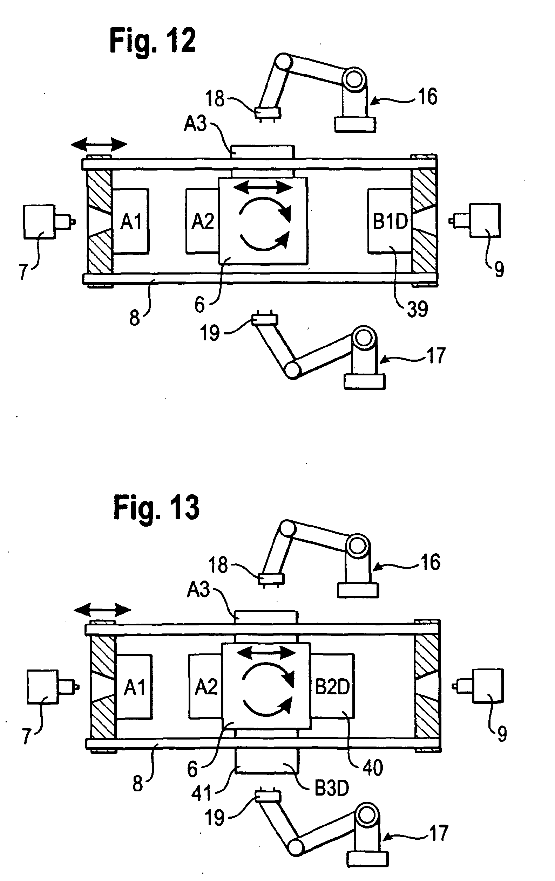

In den Figuren 12 und 13 sind Ausführungen der Erfindung dargestellt, wo eine Trennebene ungenutzt bleibt. Gemäß der Figur 12 ist in der Trennebene der Formhälften B auf der feststehenden Formaufspannplatte 2 ein Dummy-Formwerkzeug 39 (B1D) montiert; die Formhälften B2 und B3 können entfallen. Gemäß Figur 13 sind auf dem mittleren Formträgerelement 6 Dummy-Formwerkzeuge 40 (B2D) und 41 (B3D) montiert; die Formhälfte B1 kann entfallen. Es besteht aber auch die Möglichkeit, alle drei Formhälften B1, B2 und B3 durch entsprechende Dummy-Formhälften B1D, B2D und B3D zu ersetzen. In der Regel reicht es jedoch aus, anstelle der drei Formhälften B1, B2 und B3 nur ein Dummy-Formwerkzeug B1D vorzusehen. Durch die Verwendung von Dummy-Formwerkzeugen B1D, B2D und/oder B3D kann die Arbeitsebene mit den A-Formwerkzeugen weiterbetrieben werden und gleichzeitig die B-Formwerkzeuge außerhalb der Spritzgießmaschine untersucht oder bearbeitet werden, beispielsweise zur Behebung von Oberflächenfehlern. Die Dummy-Formwerkzeuge dienen sozusagen als Platzhalter für die eigentlichen B-Formwerkzeuge.

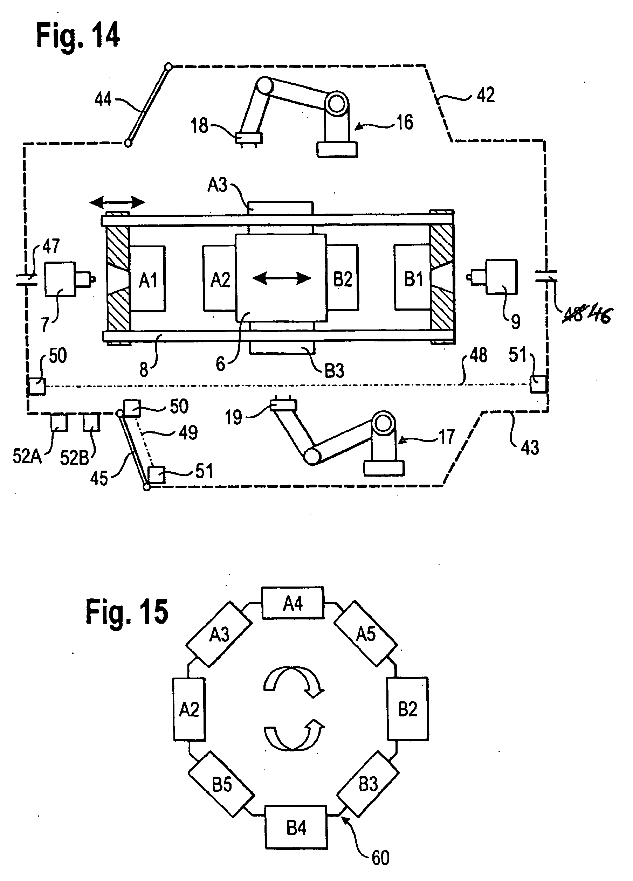

Figur 14 zeigt eine Ausführungsform der Erfindung mit einer Sicherheitseinrichtung. Um die erfindungsgemäße Vorrichtung herum sind ein Schutzzaun 43 auf der Bedienseite und eine Schutzzaun 42 auf der Bediengegenseite angeordnet, die über Schutztüren 44 und 45 verfügen. An den mit den Bezugszeichen 46 und 47 bezeichneten Stellen stoßen die beiden Schutzzäune aneinander und können dort miteinander verbunden werden, um einen geschlossenen Sicherheitsbereich auszubilden. Anstelle der beiden Schutzzäune 43 und 44 kann auch nur ein einziger Schutzzaun mit einer oder mehreren Schutztüren vorgesehen werden. Dort wo die Schutzzäune aneinanderstoßen (Positionen 46, 47) können Teile der Spritzgießmaschine aus dem Schutzzaun herausragen, beispielsweise Teile der jeweiligen Plastifiziereinheiten. Darüberhinaus können weitere Sicherheitsmaßnahmen vorgesehen werden. Beispielsweise können Lichtschranken 48 und 49 vorgesehen werden, die im wesentlichen aus einer Lichtquelle 50 und einem Empfänger 51 bestehen, und über nicht näher dargestellte Leitungen mit einer Steuereinrichtung für die Sicherheitsmaßnahmen verbunden sind. Ebenso kann eine Sicherheitsvorrichtung 52 vorgesehen werden, beispielsweise in Form von zwei im Abstand befindlicher Schalter 52a und 52b, die nur bei gleichzeitigem Betätigen ein Freigabesignal erzeugen, um die Maschine in Betrieb zu versetzen, wobei der Abstand so gewählt ist, dass die Schalter 52a und 52b von der Bedienperson nur mit ausgebreiteten Armen gleichzeitig betätigt werden können.

Anstelle des Formhälftenträgers 6 mit zwei Formhälften pro Trennebene (A2, A3 bzw. B2, B3) können auf dem mittleren Formhälftenträger auch mehr als zwei Formhälften pro Trennebene vorgesehen werden, je nachdem, wieviele Komponenten in den nachfolgenden Takten an die Vorspritzlinge aus dem ersten Takt angebracht werden sollen. Figur 15 zeigt schematisch eine Ausführungsform eines mittleren drehbaren Formhälftenträgerelements 60, bei dem mehr als vier Formhälften pro Trennebene vorgesehen sind, nämlich A2, A3, A4 und A5 für die hier nicht dargestellte Formhälfte A1 sowie B2, B3, B4 und B5 für die hier nicht dargestellte Formhälfte B1.

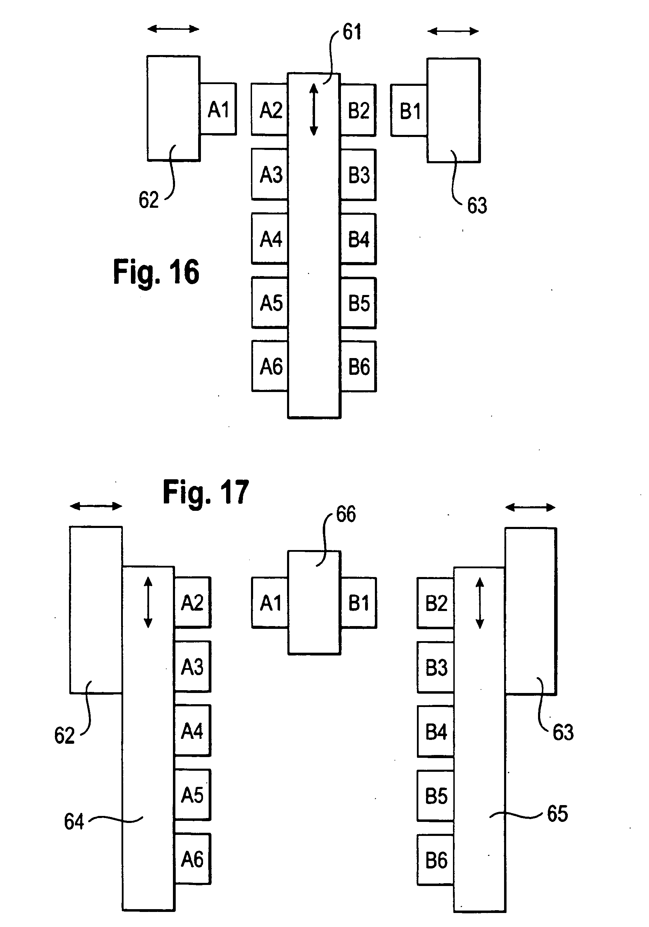

Figur 16 zeigt schematisch eine Ausführungsform mit einem mittleren linear verfahrbaren Formhälftenträger 61 mit zwei parallel zueinander angeordneten Formaufspannflächen, beispielsweise in Form einer rechteckförmigen Formaufspannplatte, so dass auf beiden Seiten dieser mittleren Formaufspannplatte die Formhälften A2, A3,... bzw. B2, B3,... befestigt werden können, die mit den äußeren Formhälften A1 und B1 zusammenwirken, um von Takt zu Takt unterschiedliche Kavitäten zu bilden. In der Figur 16 ist der mittlere Formhälftenträger 61 in Maschinenlängsrichtung ortsfest, wohingegen die äußeren Formaufspannplatten 62 und 63 mit den äußeren Formhälften A1 und B1 in Maschinenlängsrichtung verfahren werden können. Der mittlere Formhälftenträger 61 ist senkrecht zur Maschinenlängsachse verschiebbar, beispielsweise horizontal oder vertikal, so dass die Formhälften A2, A3,... sowie B2, B3,... von Takt zu Takt mit den äußeren Formhälften A1 und B2 zusammengebracht werden können. Es ist aber auch möglich, eine feste und eine bewegliche äußere Formaufspannplatte vorzusehen, wobei dann das mittlere Formträgerelement 61 in Maschinenlängsrichtung verfahrbar ist.

Figur 17 zeigt schematisch eine weitere Ausführungsform, bei dem die Formhälften A1 und B1 auf einem ortsfesten mittleren Formhälftenträger 66 befestigt sind und die weiteren Formhälften A2, A3,... sowie B2, B3,... auf äußeren Schiebetischen 64 und 65 befestigt sind, die ihrerseits verschieblich an den äußeren Formaufspannplatten 62 und 63 befestigt sind und zusammen mit diesen verfahren werden können. Es ist aber auch möglich, eine feste und eine bewegliche äußere Formaufspannplatte vorzusehen, wobei dann das mittlere Formträgerelement 66 in Maschinenlängsrichtung verfahrbar ist.

### Bezugszeichenliste

- 1: Spritzgießmaschine
- 2: Feststehende Formaufspannplatte
- 3: Feststehende Formhälfte (B1)
- 4: Bewegliche Formaufspannplatte
- 5: Bewegliche Formhälfte (A1)
- 6: Mittleres Formträgerelement
- 7: Spritzeinheit A
- 8: Holme
- 9: Spritzeinheit B
- 10: Antrieb
- 11: Halterung für Spritzeinheit A
- 12: Beweglicher PUR-Mischkopf (Bauteil A)
- 13: PUR-Dosieranlage
- 14: Feststehender PUR-Mischkopf (Bauteil B)
- 15: PUR-Dosieranlage
- 16: Roboter
- 17: Roboter
- 18: Greifer- und Vorbehandlungseinheit Bauteil A
- 19: Greifer- und Vorbehandlungseinheit Bauteil B
- 20: Modulrahmen
- 22: Linearführungen
- 24: Hydraulikzylinder
- 26: Grundplatte
- 28: Gleitführungen
- 30: Strebe
- 32: Strebe
- 34: Strebe
- 33: Maschinenbett
- 27: Drehteller
- 35: Heizstrahler
- 36: Heizstrahler
- 37: Heizfeld
- 38: Heizfeld
- 39: Dummy-Form B1D
- 40: Dummy-Form B2D
- 41: Dummy-Form B3D
- 42: Erster Schutzzaun
- 43: Zweiter Schutzzaun
- 44: Erste Schutztür
- 45: Zweite Schutztür
- 46: Erste Verbindungsstelle
- 47: Zweite Verbindungsstelle
- 48,49: Lichtschranken
- 50: Lichtquelle
- 51: Empfänger
- 52: Sicherheitsvorrichtung
- 52a: Erster Schalter der Sicherheitsvorrichtung
- 52b: Zweiter Schalter der Sicherheitsvorrichtung
- 60: Achteckiger drehbarer Formhälftenträger
- 61: Linear verfahrbarer Formhälftenträger
- 62,63: Äußere Formaufspannplatten
- 64,65: Schiebetische
- 66: Mittlerer Formhälftenträger

## Patentansprüche

1. Verfahren zur Herstellung von mehrkomponentigen Kunststoff-Formteilen, wobei mit zwei äußeren Formträgerelementen (2, 4, 62, 63, 64, 65) mit äußeren Formhälften (3, 5) und einem mittleren Formträgerelement (6, 60, 61, 66) mit mittleren Formhälften in zwei Trennebenen Kavitäten gebildet werden, in die Kunststoff-Schmelze und/oder ein PUR-Gemisch eingespritzt werden, wobei in jeder Trennebene jeweils eine erste Formhälfte (A1, B1) vorgesehen ist und jede dieser Formhälften (A1, B1) taktweise nacheinander mit ihr zugeordneten weiteren Formhälften (A2, A3, ...;B2, B3,...) zusammengebracht wird, wobei in jeder der Trennebenen von Takt zu Takt unterschiedliche Kavitäten gebildet werden, wobei in den im ersten Takt in den beiden Trennebenen gebildeten Kavitäten (A1+A2; B1+B2) Vorspritzlinge hergestellt werden, die in den ersten Formhälften (A1, B1) gehalten werden, und wobei in den nachfolgenden Takten in die weiteren in den beiden Trennebenen gebildeten Kavitäten (A1+A3, A1+A4...; B1+B3, B1+B4,...) weitere Komponenten eingespritzt werden,
**dadurch gekennzeichnet, dass**
von Takt zu Takt freie Formhälften verbleiben, an denen eine Vorbehandlung oder ein weiterer Prozeßschritt vorgenommen werden kann.

2. Verfahren nach Anspruch 1,
**dadurch gekennzeichnet, dass**
sich die ersten Formhälften (A1, B1) auf den äußeren Formträgerelementen (2, 4) und die weiteren Formhälften (A2, A3,...; B2, B3,....) auf dem mittleren Formträgerelement (6) befinden und dass es sich bei dem mittleren Formträgerelement (6) um ein würfel- oder prismenförmiges Formträgerelement (60) handelt, das um eine vertikale oder eine horizontale Achse gedreht wird, wobei in den beiden Trennebenen von Takt zu Takt die unterschiedlichen Kavitäten gebildet werden.

3. Verfahren nach Anspruch 1,
**dadurch gekennzeichnet, dass**
sich die ersten Formhälften (A1, B1) auf den äußeren Formträgerelementen (62, 63) und die weiteren Formhälften (A2, A3,...; B2, B3,....) auf dem mittleren Formträgerelement (61) befinden und dass es sich bei dem mittleren Formträgerelement (61) um ein Formträgerelement (61) mit zwei parallelen Formaufspannflächen handelt, beispielsweise um eine Platte, wobei die der ersten A-Formhälfte (A1) zugeordneten weiteren A-Formhälften (A2, A3,...) auf der einen Formaufspannfläche und die der ersten B-Formhälfte (B1) zugeordneten weiteren B-Formhälften (B2, B3, ....) auf der anderen Formaufspannfläche angeordnet sind, und dass das mittlere Formträgerelement (61) von Takt zu Takt senkrecht zur Maschinenlängsachse linear verschoben wird, wobei in den beiden Trennebenen von Takt zu Takt die unterschiedlichen Kavitäten gebildet werden.

4. Verfahren nach Anspruch 1,
**dadurch gekennzeichnet, dass**
sich die ersten Formhälften (A1, B1) auf dem mittleren Formträgerelement (66) und die weiteren Formhälften (A2, A3,...; B2, B3,....) auf den beiden äußeren Formträgerelementen (64, 65) befinden, wobei die weiteren A-Formhälften (A2, A3,...) auf dem einen äußeren Formträgerelement (64) und die weiteren B-Formhälften (B2, B3,...) auf dem anderen äußeren Formträgerelement (65) angeordnet sind, derart, dass die beiden äußeren Formträgerelemente (64, 65) von Takt zu Takt linear verschoben und/oder um eine horizontale Achse gedreht werden, wobei in den beiden Trennebenen von Takt zu Takt die unterschiedlichen Kavitäten gebildet werden.

5. Verfahren nach einem der Ansprüche 1 bis 4,
**dadurch gekennzeichnet, dass**
während der Herstellung der Vorspritzlinge und/oder während des Überflutens bzw. Anspritzens der Vorspritzlinge an den freien Formhälften eine Vorbehandlung oder ein weiterer Prozeßschritt vorgenommen wird, nämlich eine Vorwärmung, Trennmitteleinbringung, eine Trennmittelablüftung, eine Reinigung, ein Lackeintrag für einen In Mold Coating-Prozess oder eine Einbringung und Fixierung von Einlegeteilen und/oder Dekormaterialien wie Stoffen, Folien, Aluminiumleisten oder Metallleisten oder dergleichen.

6. Verfahren nach einem der Ansprüche 1 bis 5,
**dadurch gekennzeichnet, dass**
die beiden Trennebenen nacheinander aufgefahren werden, insbesondere bei unterschiedlichen Reaktionszeiten von PUR-Gemischen in den beiden Trennebenen oder bei unterschiedlichen Kühlzeiten eines thermoplastischen Vorspritzlings in den beiden Trennebenen.

7. Verfahren nach einem der Ansprüche 1 bis 6,
**dadurch gekennzeichnet, dass**
während des Flutens des PUR-Gemischs ein Prägevorgang erfolgt, wobei die in dieser Trennebene gebildete Kavität verkleinert oder vergrößert wird, insbesondere indem die Formhälften oder Einsätze in den Formhälften relativ zueinander bewegt werden.

8. Vorrichtung zur Herstellung von mehrkomponentigen Kunststoff-Formteilen, mit zwei äußeren Formträgerelementen (2, 4, 62, 63) mit äußeren Formhälften (3, 5) und einem mittleren Formträgerelement (6, 60, 61) mit mittleren Formhälften, insbesondere mit mindestens vier Formhälften, mit Mitteln zum Zufahren und Zuhalten von jeweils vier Formhälften, wobei zwei Trennebenen gebildet werden, mit Spritzeinheiten (7, 8) und/oder PUR-Anlagen (12, 13, 14, 15), die an die Formträgerelemente (6, 60, 61) und/oder an die Formhälften angedockt sind oder angedockt werden können, und wobei die äußeren Formhälften zum Halten von Formteilen, insbesondere von Vorspritzlingen, ausgebildet sind,
**dadurch gekennzeichnet, dass**
das mittlere Formträgerelement (6, 60, 61) mindestens zwei voneinander verschiedene A-Formhälften (A2, A3,...) und mindestens zwei voneinander verschiedene B-Formhälften (B2, B3,...) aufweist, so dass mit den äußeren Formhälften (A1, B1) in den beiden Trennebenen nacheinander unterschiedliche Kavitäten bildbar sind und freie Formhälften verbleiben, an denen eine Vorbehandlung oder ein weiterer Prozeßschritt vorgenommen werden kann.

9. Vorrichtung nach Anspruch 8,
**dadurch gekennzeichnet, dass**
es sich bei dem mittleren Formträgerelement um ein würfel- oder prismenförmiges Formträgerelement (60) handelt, das um eine vertikale oder eine horizontale Achse drehbar ist, so dass in den beiden Trennebenen von Takt zu Takt die unterschiedlichen Kavitäten gebildet werden können.

10. Vorrichtung nach Anspruch 8,
**dadurch gekennzeichnet, dass**
die ersten Formhälften (A1, B1) auf den äußeren Formträgerelementen (62, 63) und die weiteren Formhälften (A2, A3,...; B2, B3,....) auf dem mittleren Formträgerelement (61) angeordnet sind und dass es sich bei dem mittleren Formträgerelement (61) um ein Formträgerelement (61) mit zwei parallelen Formaufspannflächen handelt, beispielsweise um eine Platte, wobei die der ersten A-Formhälfte (A1) zugeordneten weiteren A-Formhälften (A2, A3,...) auf der einen Formaufspannfläche und die der ersten B-Formhälfte (B1) zugeordneten weiteren B-Formhälften (B2, B3, ....) auf der anderen Formaufspannfläche angeordnet sind, und dass das mittlere Formträgerelement (61) von Takt zu Takt senkrecht zur Maschinenlängsachse linear verschiebbar ist, so dass in den beiden Trennebenen von Takt zu Takt die unterschiedlichen Kavitäten gebildet werden können.

11. Vorrichtung zur Herstellung von mehrkomponentigen Kunststoff-Formteilen, mit zwei äußeren Formträgerelementen (64, 65) mit äußeren Formhälften und einem mittleren Formträgerelement (66) mit mittleren Formhälften, mit Mitteln zum Zufahren und Zuhalten von jeweils vier Formhälften, wobei zwei Trennebenen gebildet werden, mit Spritzeinheiten (7, 8) und/oder PUR-Anlagen (12, 13, 14, 15), die an die Formträgerelemente und/oder an die Formhälften angedockt sind oder angedockt werden können,
**dadurch gekennzeichnet, dass**
auf dem mittleren Formträgerelement (66) die erste A-Formhälfte (A1) und die erste B-Formhälfte (B1) angeordnet sind, wobei die mittleren Formhälften (A1, B1) zum Halten von Formteilen, insbesondere von Vorspritzlingen, ausgebildet sind, dass die weiteren Formhälften (A2, A3,....;B2, B3,...) auf den beiden äußeren Formträgerelementen (64, 65) angeordnet sind, wobei die weiteren A-Formhälften (A2, A3,...) auf dem einen äußeren Formträgerelement (64) und die weiteren B-Formhälften (B2, B3,....) auf dem anderen äußeren Formträgerelement (65) angeordnet sind, derart, dass die beiden äußeren Formträgerelemente (64, 65) von Takt zu Takt linear verschoben und/oder um eine horizontale Achse gedreht werden können, so dass in den beiden Trennebenen von Takt zu Takt unterschiedliche Kavitäten gebildet werden können und freie Formhälften verbleiben, an denen eine Vorbehandlung oder ein weiterer Prozeßschritt vorgenommen werden kann.

12. Vorrichtung nach Anspruch 11,
**dadurch gekennzeichnet, dass**
die äußeren Formträgerelemente-(64, 65) als Schiebetische ausgebildet sind, die auf äußeren Formaufspannplatten (62, 63) senkrecht zur Maschinenlängsachse linear verschoben werden können.

13. Vorrichtung nach Anspruch 11,
**dadurch gekennzeichnet, dass**
die äußeren Formträgerelemente (64, 65) als Drehtische ausgebildet sind, die auf äußeren Formaufspannplatten (62, 63) um eine horizontale Achse drehbar sind.

14. Vorrichtung nach einem der Ansprüche 8 bis 13,
**dadurch gekennzeichnet, dass**
zwei bewegliche äußere Formaufspannplatten vorgesehen sind, zwischen denen das mittlere Formträgerelement (6) ortsfest ist, wobei das mittlere Formträgerelement (6) würfelförmig ausgebildet ist und vier Formhälften (A2, A3, B2, B3) trägt, von denen jeweils zwei benachbart liegende Formhälften (A2, A3 bzw. B2, B3) einer äußeren Formaufspannplatte zugeordnet sind.

15. Vorrichtung nach einem der Ansprüche 8 bis 14.
**dadurch gekennzeichnet, dass**
an die beiden äußeren Formhälften jeweils eine Spritzeinheit (7, 9) und ein Mischkopf (12, 14) einer PUR-Anlage angedockt sind.

## Claims

1. Method for the production of multi-component plastic mouldings, wherein with two outer mould carrier elements (2, 4, 62, 63, 64, 65) with outer mould halves (3, 5) and with a central mould carrier element (6, 60, 61, 66) with central mould halves, cavities are formed in two parting planes, into which plastic melt and/or a PUR mixture are injected, wherein in each parting plane respectively a first mould half (A1, B1) is provided and each of these mould halves (A1, B1) is brought together in a synchronized manner in succession with further mould halves (A2, A3, ..; B2, B3,...) associated therewith, wherein in each of the parting planes different cavities are formed from cycle to cycle, wherein in the cavities (A1+A2; B1+B2) formed in the two parting planes in the first cycle, preforms are produced, which are held in the first mould halves (A1, B1), and wherein in the subsequent cycles further components are injected into the further cavities (A1+A3, A1+A4...; B1+B3, B1+B4,...) formed in the two parting planes,
**characterized in that**
from cycle to cycle free mould halves remain, at which a pre-treatment or a further process step can be carried out.

2. Method according to Claim 1,
**characterized in that**
the first mould halves (A1, B1) are situated on the outer mould carrier elements (2, 4) and the further mould halves (A2, A3,...; B2, B3...) are situated on the central mould carrier element (6), and that the central mould carrier element (6) is a cube-shaped or prism-shaped mould carrier element (60), which is rotated about a vertical or a horizontal axis, with the different cavities being formed in the two parting planes from cycle to cycle.

3. Method according to Claim 1,
**characterized in that**
the first mould halves (A1, B1) are situated on the outer mould carrier elements (62, 63) and the further mould halves (A2, A3,...; B2, B3,...) are situated on the central mould carrier element (61), and that the central mould carrier element (61) is a mould carrier element (61) with two parallel platen areas, for example a plate, wherein the further A-mould halves (A2, A3,...) associated with the first A-mould half (A1) are arranged on the one platen area and the further B-mould halves (B2, B3,...) associated with the first B-mould half (B1) are arranged on the other platen area, and that the central mould carrier element (61) is moved linearly from cycle to cycle perpendicularly to the longitudinal axis of the machine, wherein in the two parting planes the different cavities are formed from cycle to cycle.

4. Method according to Claim 1,
**characterized in that**
the first mould halves (A1, B1) are situated on the central mould carrier element (66) and the further mould halves (A2, A3,...; B2, B3,...) are situated on the two outer mould carrier elements (64, 65), wherein the further A-mould halves (A2, A3,...) are arranged on the one outer mould carrier element (64) and the further B-mould halves (B2, B3,...) are arranged on the other outer mould carrier element (65), such that the two outer mould carrier elements (64, 65) are moved linearly from cycle to cycle and/or are rotated about a horizontal axis, wherein in the two parting planes the different cavities are formed from cycle to cycle.

5. Method according to one of Claims 1 to 4,
**characterized in that**
during the production of the preforms and/or during the flooding of respectively the injecting of the preforms at the free mould halves, a pre-treatment or a further process step is carried out, namely a preheating, an introduction of mould release agent, a venting of mould release agent, a cleaning, an addition of varnish for an in-mould coating process or an introduction and fixing of insertion parts and/or decoration materials such as fabrics, foils, aluminium strips or metal strips or suchlike.

6. Method according to one of Claims 1 to 5,
**characterized in that**
the two parting planes are opened in succession, in particular in the case of different reaction times of PUR mixtures in the two parting planes or in the case of different cooling times of a thermoplastic preform in the two parting planes.

7. Method according to one of Claims 1 to 6,
**characterized in that**
during the flooding of the PUR mixture, a compression process takes place, wherein the cavity which is formed in this parting plane is made smaller or larger, in particular by the mould halves or inserts in the mould halves being moved relative to each other.

8. Device for the production of multi-component plastic mouldings, with two outer mould carrier elements (2, 4, 62, 63) with outer mould halves (3, 5) and with a central mould carrier element (6, 60, 61) with central mould halves, in particular with at least four mould halves, with means for closing and keeping closed four mould halves respectively wherein two parting planes are formed, with injection units (7, 8) and/or PUR facilities (12, 13, 14, 15), which are or can be docked onto the mould carrier elements (6, 60, 61) and/or onto the mould halves, and wherein the outer mould halves are constructed for the holding of mouldings, in particular of preforms, **characterized in that**
the central mould carrier element (6, 60, 61) has at least two different A-mould halves (A2, A3,...) which are different from each other, and at least two B-mould halves (B2, B3,...) which are different from each other, so that different cavities are able to be formed with the outer mould halves (A1, B1) in the two parting planes in succession, and free mould halves remain, at which a pre-treatment or a further process step can be carried out.

9. Device according to Claim 8,
**characterized in that**
the central mould carrier element is a cube-shaped or prism-shaped mould carrier element (60), which is rotatable about a vertical or a horizontal axis, so that in the two parting planes the different cavities can be formed from cycle to cycle.

10. Device according to Claim 8,
**characterized in that**
the first mould halves (A1, B1) are arranged on the outer mould carrier elements (62, 63) and the further mould halves (A2, A3,...; B2, B3,...) are arranged on the central mould carrier element (61) and that the central mould carrier element (61) is a mould carrier element (61) with two parallel platen areas, for example a plate, wherein the further A-mould halves (A2, A3,...) which are associated with the first A-mould half (A1) are arranged on the one platen area, and the further B-mould halves (B2, B3,...) which are associated with the first B-mould half (B1) are arranged on the other platen area, and that the central mould carrier element (61) is able to be moved linearly from cycle to cycle perpendicularly to the longitudinal axis of the machine, so that in the two parting planes the different cavities can be formed from cycle to cycle.

11. Device for the production of multi-component plastic mouldings, with two outer mould carrier elements (64, 65) with outer mould halves and a central mould carrier element (66) with central mould halves, with means for closing and keeping closed four mould halves respectively, wherein two parting planes are formed, with injections units (7, 8) and/or PUR facilities (12, 13, 14, 15), which are or can be docked onto the mould carrier elements and/or onto the mould halves,
**characterized in that**
the first A-mould half (A1) and the first B-mould half (B1) are arranged on the central mould carrier element (66), wherein the central mould halves (A1, B1) are constructed for the holding of mouldings, in particular of preforms, that the further mould halves (A2, A3,...; B2, B3,...) are arranged on the two outer mould carrier elements (64, 65), wherein the further A-mould halves (A2, A3,...) are arranged on the one outer mould carrier element (64) and the further B-mould halves (B2, B3) are arranged on the other outer mould carrier element (65), such that the two outer mould carrier elements (64, 65) can be moved linearly from cycle to cycle and/or rotated about a horizontal axis, so that different cavities can be formed in the two parting planes from cycle to cycle and free mould halves remain, at which a pre-treatment or a further process step can be carried out.

12. Device according to Claim 11,
**characterized in that**
the outer mould carrier elements (64, 65) are constructed as sliding tables which can be moved linearly on outer mould platens (62, 63) perpendicularly to the longitudinal axis of the machine.

13. Device according to Claim 11,
**characterized in that**
the outer mould carrier elements (64, 65) are constructed as rotary tables which are rotatable about a horizontal axis on outer mould platens (62, 63).

14. Device according to one of Claims 8 to 13,
**characterized in that**
two movable outer mould platens are provided, between which the central mould carrier element (6) is fixed, wherein the central mould carrier element (6) is constructed in a cube shape and carries four mould halves (A2, A3, B2, B3), of which respectively two mould halves lying adjacent (A2, A3 or respectively B2, B3) are associated with an outer mould platen.

15. Device according to one of Claims 8 to 14,
**characterized in that**
an injection unit (7, 9) and a mixing head (12, 14) of a PUR facility are respectively docked onto the two outer mould halves.

## Revendications

1. Procédé de fabrication de pièces moulées en matière synthétique à plusieurs composants, dans lequel, avec deux éléments de support de moule extérieurs (2, 4, 62, 63, 64, 65) avec des moitiés de moule extérieures (3, 5) et un élément de support de moule central (6, 60 ; 61, 66) avec des moitiés de moule centrales, des cavités peuvent être formées dans deux plans de séparation, dans lesquelles de la fonte de matière synthétique et/ou un mélange PUR peut être injecté(e), sachant que dans chaque plan de séparation, respectivement une première moitié de moule (A1, B1) est prévue et chacune de ces moitiés de moule (A1, B1) peut être réunie de manière cyclique l'une après l'autre avec d'autres moitiés de moule (A2, A3... ; B2, B3, ...) qui lui sont attribuées, sachant que dans chacun des plans de séparation des cavités différentes sont formées de cycle en cycle, sachant que dans les cavités (A1+A2 ; B1+B2) formées dans les deux plans de séparation lors du premier cycle, des pièces pré-moulées sont fabriquées qui sont maintenues dans les premières moitiés de moule (A1, B1) et sachant que dans les cycles suivants, d'autres composants sont injectés dans les autres cavités (A1+A3, A1+A4... ; B1+B3, B1+B4, ...) formées dans les deux plans de séparation,
**caractérisé en ce que**
des moitiés de moule restent libres de cycle en cycle sur lesquelles un prétraitement ou une étape de procédé suivante peut être effectué(e).

2. Procédé selon la revendication 1, **caractérisé en ce que** les premières moitiés de moule (A1, B1) se trouvent sur les éléments de support de moule
extérieurs (2, 4) et les autres moitiés de moule (A2, A3... ; B2, B3, ...) se trouvent sur l'élément de support de moule central (6) et qu'il s'agit pour l'élément de support de moule central (6) d'un élément de support de moule cubique ou prismatique (60) qui est tourné sur un axe vertical ou horizontal, sachant que les différentes cavités sont formées de manière cyclique dans les deux plans de séparation.

3. Procédé selon la revendication 1, **caractérisé en ce que** les premières moitiés de moule (A1, B1) se trouvent sur les éléments de support de moule extérieurs (62, 63) et les autres moitiés de moule (A2, A3... ; B2, B3, ...) sur l'élément de support de moule central (61) et ce qu'il s'agit pour l'élément de support de moule central (61) d'un élément de support de moule (61) avec deux surfaces de serrage de moule parallèles, par exemple d'un plateau, sachant que les autres moitiés de moule A (A2, A3...) attribuées à la première moitié de moule A (A1) sont disposées sur l'une surface de serrage et les autres moitiés de moule B (A2, A3...) attribuées à la première moitié de moule B (B1) sont disposées sur l'autre surface de serrage et que l'élément de support de moule central (61) est poussé linéairement et verticalement à l'axe longitudinal de la machine de cycle en cycle, sachant que les différentes cavités sont formées de manière cyclique dans les deux plans de séparation.

4. Procédé selon la revendication 1, **caractérisé en ce que** les premières moitiés de moule (A1, B1) se trouvent sur l'élément de support de moule central (66) et les autres moitiés de moule (A2, A3... ; B2, B3, ...) sur les deux éléments de support de moule extérieurs (64, 65), sachant que les autres moitiés de moule A (A2, A3) sont disposées sur l'un élément de support de moule extérieur (64) et les autres moitiés de moule B (B2, B3) sont disposées sur l'autre élément de support de moule extérieur (65), de telle manière que les deux éléments de support de moule extérieurs (64, 65) sont poussés linéairement de manière cyclique et/ou tournés sur un axe horizontal, sachant que les différentes cavités sont formées de manière cyclique dans les deux plans de séparation.

5. Procédé selon l'une des revendications 1 à 4, **caractérisé en ce que** pendant la fabrication des pièces pré-moulées et/ou pendant le noyage respectivement l'injection des pièces pré-moulées sur les moitiés de moule libre, un prétraitement ou une autre étape de procédé a lieu, à savoir un préchauffage, l'apport d'agents de démoulage, un échappement des agents de démoulage, un nettoyage, l'application d'une peinture pour un procédé « in mold coating » ou le placement et la fixation de d'inserts et/ou de matériaux décoratifs comme des tissus, des films, des baguettes d'aluminium ou métalliques ou similaire.

6. Procédé selon l'une des revendications 1 à 5, **caractérisé en ce que** les deux plans de séparation sont démarrés l'un après l'autre, en particulier lorsque les temps de réaction des mélanges PUR sont différents dans les deux plans de séparation ou lorsque les temps de refroidissement d'une pièce prémoulée thermoplastique sont différents dans les deux plans de séparation.

7. Procédé selon l'une des revendications 1 à 6, **caractérisé en ce que** pendant le noyage du mélange PUR, une étape d'estampage a lieu, dans laquelle la cavité formée dans ce plan de séparation est réduite ou agrandie, en particulier **en ce que** les moitiés de moule ou les inserts dans les moitiés de moule sont approché(s) l'un(e) de l'autre.

8. Dispositif de fabrication de pièces moulées en matière synthétique à plusieurs composants, comprenant deux éléments de support de moule extérieurs (2, 4, 62, 63) avec des moitiés de moule extérieures (3, 5) et un élément de support de moule central (6, 60, 61) avec des moitiés de moule centrales, en particulier avec au moins quatre moitiés de moule, avec des moyens pour approcher et maintenir respectivement les quatre moitiés de moule, sachant que deux plans de séparation sont formés, avec des unités d'injection (7, 8) et/ou des installations PUR (12, 13, 14, 15) qui sont ou peuvent être attelées sur les éléments de support de moule central (6, 60, 61) et/ou sur les moitiés de moule, et sachant que les moitiés de moule extérieures sont formées pour maintenir des pièces moulées en particulier des pièces pré-moulées,
**caractérisé en ce que** l'élément de support de moule central (6, 60, 61) présente au moins deux moitiés de moule A (A2, A3, ...) différentes l'une de l'autre et au moins deux moitiés de moule B (B2, B3, ...) différentes l'une de l'autre, de façon à ce qu'avec les moitiés de moule extérieures (A1, B1) différentes cavités puissent être formées l'une après l'autre dans les deux plans de séparation et que des moitiés de moule restent libres sur lesquelles un prétraitement ou une étape de procédé suivante puisse être effectué(e).

9. Dispositif selon la revendication 8, **caractérisé en ce qu'**il s'agit pour l'élément de support de moule central d'un élément de support de moule cubique ou prismatique (60) qui est tourné sur un axe vertical ou horizontal, sachant que les différentes cavités sont formées de manière cyclique dans les deux plans de séparation..

10. Dispositif selon la revendication 8, **caractérisé en ce que** les premières moitiés de moule (A1, B1) se trouvent sur les éléments de support de moule extérieurs (62, 63) et les autres moitiés de moule (A2, A3... ; B2, B3, ...) se trouvent sur l'élément de support de moule central (61) et qu'il s'agit pour l'élément de support de moule central (61) d'un élément de support de moule (61) avec deux surfaces de serrage de moule parallèles, par exemple d'un plateau, sachant que les autres moitiés de moule A (A2, A3...) attribuées à la première moitié de moule A (A1) sont disposées sur l'une surface de serrage et les autres moitiés de moule B (A2, A3...) attribuées à la première moitié de moule B (B1) sont disposées sur l'autre surface de serrage et que l'élément de support de moule central (61) peut être poussé linéairement et verticalement à l'axe longitudinal de la machine de cycle en cycle de façon à ce que les différentes cavités puissent être formées de manière cyclique dans les deux plans de séparation.

11. Dispositif de fabrication de pièces moulées en matière synthétique à plusieurs composants, comprenant deux éléments de support de moule extérieurs (64, 65) avec des moitiés de moule extérieures et un élément de support de moule central (66) avec des moitiés de moule centrales, avec des moyens pour approcher et maintenir respectivement quatre moitiés de moule, sachant que deux plans de séparation sont formés, avec des unités d'injection (7, 8) et/ou des installations PUR (12, 13, 14, 15) qui sont ou peuvent être attelées sur les éléments de support de moule central et/ou sur les moitiés de moule,
**caractérisé en ce que** la première moitié de moule A (A1) et la première moitié de moule B (B1) sont disposées sur l'élément de support de moule central (66), sachant que les moitiés de moule centrales (A1, B1) sont formées pour maintenir des pièces moulées, en particulier des pièces pré-moulées, que les autres moitiés de moule (A2, A3, ... ; B2, B3, ...) sont disposées sur les deux éléments de support de moule extérieurs (64, 65), sachant que les autres moitiés de moule A (A2, A3, ...) sont disposées sur l'un élément de support de moule extérieur (64) et les autres moitiés de moule B (B2, B3, ...) sont disposées sur l'autre élément de support de moule extérieur (65), de telle manière que les deux éléments de support de moule extérieurs (64, 65) puissent être poussés linéairement de manière cyclique et/ou tournés sur un axe horizontal, de façon que les différentes cavités soient formées de manière cyclique dans les deux plans de séparation et que des moitiés de moule restent libres sur lesquelles un prétraitement ou une étape de procédé suivante puisse être effectué(e).

12. Dispositif selon la revendication 11, **caractérisé en ce que** les éléments de support de moule extérieurs (64, 65) sont formés comme des tables coulissantes, qui peuvent être poussées linéairement et verticalement à l'axe longitudinal de la machine sur des plateaux de serrage de moule extérieurs (62, 63).

13. Dispositif selon la revendication 11, **caractérisé en ce que** les éléments de support de moule extérieurs (64, 65) sont formés comme des tables coulissantes qui peuvent tourner sur un axe horizontal.

14. Dispositif selon l'une des revendications 8 à 13, **caractérisé en ce que** deux plateaux mobiles extérieurs de serrage de moule sont prévus, entre lesquels l'élément de support de moule central (6) est fixé, sachant que l'élément de support de moule central (6) est cubique et supporte quatre moitiés de moule (A2, A3, B2, B3) desquelles respectivement deux moitiés de moule voisines (A2, A3 respectivement B2, B3) sont attribuées à un plateau de serrage de moule extérieur.

15. Dispositif selon l'une des revendications 8 à 14, **caractérisé en ce qu'**une unité d'injection (7, 9) et une tête de mélange (12, 14) respectives d'une installation PUR sont attelées sur les deux moitiés de moule extérieures.
